# EUROPEAN PATENT APPLICATION

(11) **EP 4 669 019 A1**
(43) Date of publication of application: **24.12.2025**
(21) Application number: 23921695.5
(22) Date of filing: 14.02.2023
(51) Int. Cl.: H04W 76/19

(54) **COMMUNICATION RECOVERY TIME NOTIFICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/075959
(87) International publication number: WO 2024/168526

(57) **Abstract**

The present disclosure is applied to the technical field of wireless communications. Provided are a communication recovery time notification method and apparatus, and a device and a readable storage medium. The communication recovery time notification method, which is executed by a user equipment, comprises: sending first indication information to a network device, wherein the first indication information is used for indicating a communication recovery time of a user equipment.

## Description

### TECHNICAL FIELD

The present disclosure relates to the field of wireless communication technologies and, in particular, to a communication recovery duration notification method and apparatus, a device and a readable storage medium.

### BACKGROUND

User Equipment (User Equipment, UE) may need to perform an energy collecting process to obtain power for communication. Different user equipment may vary in power storage capacity and power collecting capability. Network devices can schedule different user equipment in different ways. It is necessary to consider how to perform more reasonable communication scheduling for different user equipment.

### SUMMARY

The present disclosure provides a communication recovery duration notification method and apparatus, a device and a readable storage medium.

In a first aspect, a communication recovery duration notification method is provided, which is performed by a user equipment and includes:
sending first indication information to a network device, where the first indication information indicates a communication recovery duration of the user equipment.

In some possible implementations, the communication recovery duration is a duration required for the user equipment to reach a first communication capability, and the first communication capability corresponds to power of the user equipment reaching a first threshold.

In some possible implementations, the method further includes: determining the first threshold according to a protocol specification; or determining the first threshold according to a requirement of the user equipment.

In some possible implementations, the communication recovery duration is one of a plurality of communication recovery durations specified in a protocol or configured by the network device.

In some possible implementations, the method further includes: sending second indication information to the network device, where the second indication information indicates endurance capability.

In some possible implementations, the endurance capability comprises at least one of the following: a first parameter indicating remaining power; a second parameter indicating endurance duration.

In some possible implementations, the first indication information is sent via high-layer signaling.

In some possible implementations, the first indication information is sent in response to remaining power of the user equipment being less than or equal to a second threshold.

In some possible implementations, the first indication information is sent periodically.

In some possible implementations, the method further includes:
refraining from monitoring a downlink channel during a time period corresponding to the communication recovery duration.

In a second aspect, a communication recovery duration notification method is provided, which is performed by a network device and includes:
receiving first indication information sent by a user equipment, where the first indication information indicates a communication recovery duration of the user equipment, and the communication recovery duration is a duration required for the user equipment to reach a first communication capability.

In some possible implementations, the first communication capability corresponds to power of the user equipment reaching a first threshold.

In some possible implementations, the communication recovery duration is one of a plurality of communication recovery durations specified in a protocol or configured by the network device.

In some possible implementations, the method further includes:
receiving second indication information sent by the user equipment, where the second indication information indicates endurance capability.

In some possible implementations, the endurance capability includes at least one of the following:
a first parameter indicating remaining power;
a second parameter indicating endurance duration.

In some possible implementations, the first indication information is received via high-layer signaling.

In some possible implementations, the first indication information is received periodically.

In some possible implementations, the method further includes:
refraining from sending a downlink channel during a time period corresponding to the communication recovery duration.

In a third aspect, a communication recovery duration notification apparatus is provided, which is configured in a user equipment and includes:
a transceiver module, configured to send first indication information to a network device, where the first indication information indicates a communication recovery duration of the user equipment.

In a fourth aspect, a communication recovery duration notification apparatus is provided, which is configured in a network device and includes:
a transceiver module, configured to receive first indication information sent by a user equipment, where the first indication information indicates a communication recovery duration of the user equipment.

In a fifth aspect, an electronic device is provided, including one or more processors and a memory,
the memory is configured to store a computer program; and
the one or more processors are configured to execute the computer program to implement the first aspect or any possible design of the first aspect.

In a sixth aspect, an electronic device is provided, including one or more processors and a memory,
the memory is configured to store a computer program; and
the one or more processors are configured to execute the computer program to implement the second aspect or any possible design of the second aspect.

In a seventh aspect, a computer-readable storage medium is provided. The computer-readable storage medium has stored therein instructions that, when invoked and executed on a computer, cause the computer to perform the first aspect or any possible design of the first aspect.

In an eighth aspect, a computer-readable storage medium is provided. The computer-readable storage medium has stored therein instructions that, when invoked and executed on a computer, cause the computer to perform the second aspect or any possible design of the second aspect.

In a ninth aspect, a communication system is provided. The communication system includes a user equipment and a network device, where the user equipment is configured to perform the first aspect or any possible design of the first aspect; and the network device is configured to perform the second aspect or any possible design of the second aspect.

In the present disclosure, the UE reports the communication recovery duration to the network device, providing an accurate reference basis for the network device to perform reasonable communication scheduling for the UE. This enables the network device to schedule communication for the UE reasonably based on the communication recovery duration, thereby improving the scheduling capability of the network device.

### BRIEF DESCRIPTION OF DRAWINGS

The drawings described herein are used to provide a further understanding of embodiments of the present disclosure and constitute a part of the present disclosure. The schematic embodiments of the present disclosure and the descriptions thereof are used to explain the embodiments of the present disclosure and do not constitute an improper limitation of the embodiments of the present disclosure.

The drawings herein are incorporated into and constitute a part of this specification, illustrate embodiments consistent with the embodiments of the present disclosure, and together with the specification serve to explain the principles of the embodiments of the present disclosure.
FIG. 1 is a schematic diagram of a wireless communication system architecture according to an embodiment of the present disclosure.
FIG. 2 is a schematic interaction diagram for communication recovery duration notification according to an embodiment of the present disclosure.
FIG. 3 is another schematic interaction diagram for communication recovery duration notification according to an embodiment of the present disclosure.
FIG. 4 is a flowchart of a communication recovery duration notification method performed by a user equipment according to an embodiment of the present disclosure.
FIG. 5 is a flowchart of another communication recovery duration notification method performed by a user equipment according to an embodiment of the present disclosure.
FIG. 6 is a flowchart of a communication recovery duration notification method performed by a network device according to an embodiment of the present disclosure.
FIG. 7 is a flowchart of another communication recovery duration notification method performed by a network device according to an embodiment of the present disclosure.
FIG. 8 is a structural diagram of a communication recovery duration notification apparatus according to an embodiment of the present disclosure.
FIG. 9 is a structural diagram of another communication recovery duration notification apparatus according to an embodiment of the present disclosure.
FIG. 10 is a structural diagram of a communication recovery duration notification apparatus according to an embodiment of the present disclosure.
FIG. 11 is a structural diagram of a communication recovery duration notification apparatus according to an embodiment of the present disclosure.

### DETAILED DESCRIPTION

The embodiments of the present disclosure will be further described with reference to the drawings and specific implementations.

Exemplary embodiments will be described in detail herein, examples of which are illustrated in the accompanying drawings. When the following description refers to the drawings, the same numerals in different drawings refer to the same or similar elements unless otherwise indicated. The implementations described in the following exemplary embodiments do not represent all implementations consistent with the embodiments of the present disclosure. Instead, they are merely examples of apparatuses and methods consistent with some aspects of the present disclosure as detailed in the appended claims.

The terms used in the embodiments of the present disclosure are for the purpose of describing particular embodiments only and are not intended to limit the embodiments of the present disclosure. As used in the embodiments of the present disclosure and the appended claims, the singular forms "a," "an," and "the" are intended to include the plural forms as well, unless the context clearly indicates otherwise. It should also be understood that the term "and/or" as used herein refers to and encompasses any and all possible combinations of one or more of the associated listed items.

It should be understood that although the terms first, second, third, etc. may be used in the embodiments of the present disclosure to describe various information, such information should not be limited by these terms. These terms are only used to distinguish information of the same type from each other. For example, without departing from the scope of the embodiments of the present disclosure, first indication information may also be referred to as second indication information, and similarly, second indication information may also be referred to as first indication information. Depending on the context, the words "if" and "in case" as used herein may be interpreted as "at the time of" or "when" or "in response to determining."

Embodiments of the present disclosure are described in detail below, examples of which are illustrated in the accompanying drawings, where the same or similar reference numerals refer to the same or similar elements throughout. The embodiments described below with reference to the drawings are exemplary and are intended to explain the present disclosure and should not be construed as limiting the present disclosure.

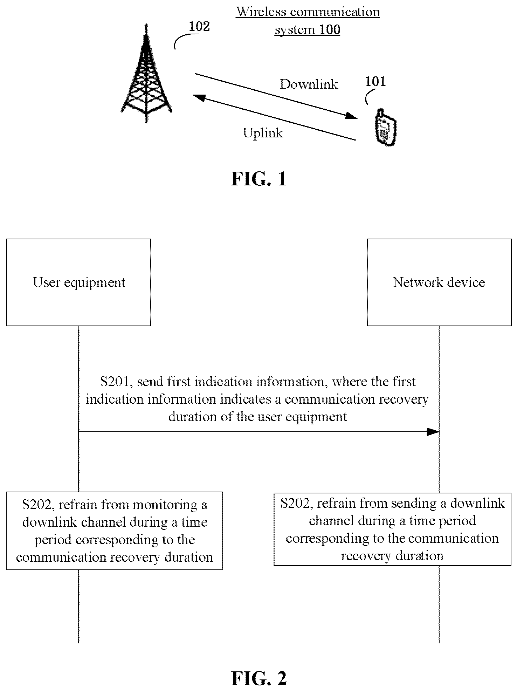

As shown in FIG. 1, methods provided in embodiments of the present disclosure may be applied to a wireless communication system 100, which may include a user equipment 101, a network device 102, with no limit on the number of included devices.

It should be understood that the wireless communication system 100 described above is applicable to both low-frequency and high-frequency scenarios. Application scenarios of the wireless communication system 100 include, but are not limited to, a long term evolution (long term evolution, LTE) system, a LTE frequency division duplex (frequency division duplex, FDD) system, a LTE time division duplex (time division duplex, TDD) system, a worldwide interoperability for micro wave access (worldwide interoperability for micro wave access, WiMAX) communication system, a cloud radio access network (cloud radio access network, CRAN) system, a future 5th-Generation (5th-Generation, 5G) system, a new radio (new radio, NR) communication system or a future evolved public land mobile network (public land mobile network, PLMN) system, an Internet of things (Internet of things, IoT) terminal.

The user equipment 101 above may be a terminal (terminal), an access user equipment, a user equipment unit, a user equipment station, a mobile station (mobile station, MS), a remote station, a remote user equipment, a mobile user equipment (mobile terminal), a wireless communication device, a user equipment agent, etc. The user equipment 101 may have a wireless transceiving function, enabling it to communicate (e.g., wirelessly) with one or more network devices of one or more communication systems and receive network services provided by the network devices. The network devices here include, but are not limited to, the illustrated network device 102.

The user equipment 101 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with wireless communication capabilities, a computing device, other processing device connected to a wireless modem, an in-vehicle device, a wearable device, a user equipment in a future 5G network, or a user equipment in a future evolved PLMN network.

For example, the network device 102 may be an access network device (or called access network site). An access network device refers to a device that provides network access functions, such as a radio access network (radio access network, RAN) base station. Specifically, it may include a base station (base station, BS), or a wireless resource management device that includes a base station and is configured to control the base station, etc., and may also include a relay station (relay device), an access point, a base station in a future 5G network, a base station in a future evolved PLMN network, or a NR base station. It may be a wearable device or an in-vehicle device. The network device 102 may also be a communication chip with a communication module.

In order to perform reasonable communication scheduling for different UEs, a network device needs to acquire the capabilities of different UEs in advance. For example, during communication between the network device and a UE, if the remaining power of the UE is low, the network device may stop communication scheduling for the UE when there are no urgent communication requirements. The UE can resume communication only after collecting a certain amount of power through an energy collecting process within a period of time, and then the network device may continue to perform communication scheduling for the UE.

The premise for executing the above processing process is that the network device has been informed of the power status of the UE and the communication recovery duration for collecting power, so it is necessary to consider how to enable the network device to be informed of the communication recovery duration of the UE in time.

An embodiment of the present disclosure provides a communication recovery duration notification method. FIG. 2 is a flowchart of a communication recovery duration notification method according to an exemplary embodiment. As shown in FIG. 2, the method includes S201-S202.

S201: a UE sends first indication information to a network device, where the first indication information indicates a communication recovery duration of the user equipment.

In some possible implementations, the communication recovery duration may be a duration occupied by a process in which the UE collects energy to obtain electrical energy. Starting from the moment when the UE sends the first indication information, after the communication recovery duration elapses, the UE can resume communication.

In some possible implementations, starting from the moment when the UE sends the first indication information, after the communication recovery duration elapses, the UE may further send to the network device information indicating that communication has been resumed.

In some possible implementations, the communication recovery duration is a duration required for the user equipment to reach a first communication capability.

For example, the first communication capability corresponds to power of the user equipment reaching a first threshold.

In an example, the power of the user equipment reaching the first threshold refers to an available power reaching the maximum power of the UE, that is, the available power in the UE reaches the maximum power that the UE can support.

In another example, the first threshold refers to a first set proportion of the maximum power of the UE, for example, the first set proportion is 80%, 90%, 95%, etc. The first set proportion may be determined by the UE according to the requirement of the UE. The requirement of the UE may include various usage requirements of the UE, for example, the requirement of the UE include at least one of a communication quality requirement and a power saving requirement.

Optionally, the manner in which the UE acquires the first threshold is: determining the first threshold according to a protocol specification. The protocol includes the specified first threshold.

Optionally, the UE determines the first threshold by itself, that is, the UE determines the first threshold according to the requirement of the UE. When the UE determines the first threshold by itself, it does not need to refer to the definition in the protocol, nor does it need the network device to configure the first threshold for it.

In some possible implementation, the first indication information is sent in response to remaining power of the user equipment being less than or equal to a second threshold. For example, in S201, when the remaining power of the UE is less than or equal to the second threshold, the first indication information is sent to the network device.

In an example, the second threshold refers to a second set proportion of the maximum power of the UE, for example, the second set proportion is 5%, 10%, 20%, etc. The second set proportion may be determined by the UE according to the requirement of the UE.

In some possible implementations, the first indication information is sent periodically. For example, in S201, the UE can periodically send the first indication information to the network device.

In some possible implementations, in S201, the UE sends high-layer signaling to the network device, and the high-layer signaling includes the first indication information.

Optionally, the high-layer signaling is Radio Resource Control (Radio Resource Control, RRC) signaling.

Optionally, the high-layer signaling is Media Access Control (Media Access Control, MAC) Control Element (Control Element, CE) signaling.

S202: the network device refrains from sending a downlink channel during a time period corresponding to the communication recovery duration, and/or, the UE refrains from monitoring a downlink channel during a time period corresponding to the communication recovery duration.

Optionally, the downlink channel is a downlink control channel or a downlink shared channel.

Optionally, in some implementations of the present application, refraining from monitoring the downlink channel may mean that the UE does not expect the network device to send a downlink channel to the UE.

After the network device is informed of the communication recovery duration of the UE, it can refrain from sending downlink information (carried by the downlink channel) during the time period corresponding to the communication recovery duration, thereby saving scheduling resources; the UE refrains from monitoring the downlink channel during the time period corresponding to the communication recovery duration, thereby saving the power of the UE.

In the embodiment of the present disclosure, the UE reports the communication recovery duration to the network device, providing an accurate reference basis for the network device to perform reasonable communication scheduling for the UE. This enables the network device to refrain from scheduling the UE during the time period corresponding to the communication recovery duration and resume scheduling the UE after the time period corresponding to the communication recovery duration, thereby improving the scheduling efficiency of the network device and enhancing the scheduling flexibility of the network device.

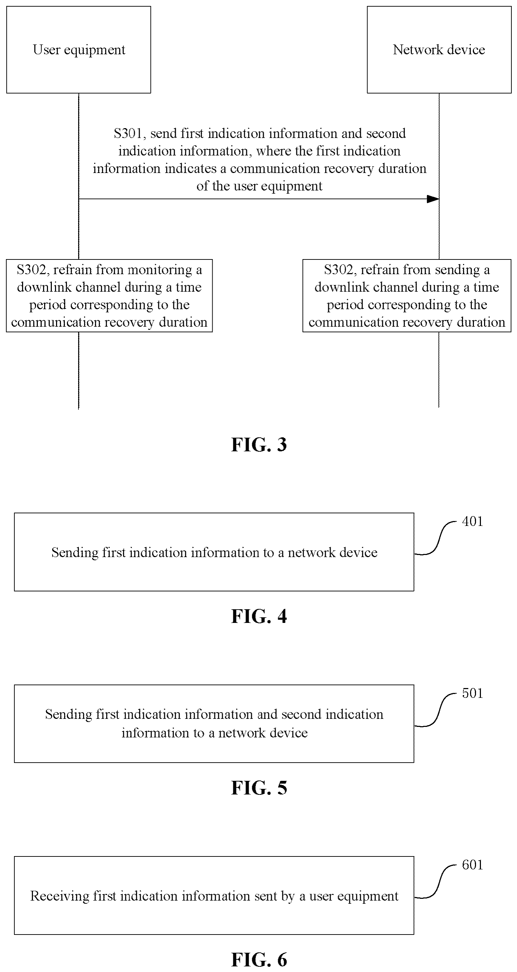

An embodiment of the present disclosure provides a communication recovery duration notification method. FIG. 3 is a flowchart of a communication recovery duration notification method according to an exemplary embodiment. As shown in FIG. 3, the method includes S301-S302.

S301: a UE sends first indication information and second indication information to a network device.

For the definition of the first indication information, reference may be made to S201, which will not be repeated here. The second indication information indicates endurance capability.

In some possible implementations, the endurance capability may represent remaining power of the UE.

In some possible implementations, the endurance capability includes at least one of the following:
a first parameter indicating a range of a relative proportion of the remaining power;
a second parameter indicating a range of the endurance duration.

The first parameter is one of a plurality of first parameters specified in a protocol, and the second parameter is one of a plurality of second parameters specified in a protocol.

Optionally, the protocol only specifies a plurality of first parameters, not including a specific range value corresponding to each first parameter. The protocol only specifies a plurality of second parameters, not including a specific range value corresponding to each second parameter.

Different values of the first parameter represent different ranges of the remaining power, and the remaining power can be expressed as a relative proportion.

In an example, the first parameter includes four different values: L1, L2, L3 and L4, where L1: <5%, L2: 5%~10%, L3: 10%~20%, L4: 20%~30%.

In another example, the first parameter includes five different values: L1, L2, L3, L4 and L5, where L1: <5%, L2: 5%~10%, L3: 10%~20%, L4: 20%~30%, L5: 30%~50%.

Different values of the second parameter represent different ranges of the endurance capability, and the unit of the endurance capability can be endurance duration, and the corresponding unit can be seconds.

In an example, the second parameter includes three different values: value 1, value 2, and value 3, where value 1: <10s, value 2: 10~30s, value 3: 30~60s.

In another example, the second parameter includes four different values: value 1, value 2, value 3, and value 4, where value 1: <10s, value 2: 10~30s, value 3: 30~60s, value 4: 60~100s.

In some possible implementations, in S301, the UE sends high-layer signaling to the network device, and the high-layer signaling includes the first indication information and the second indication information.

Optionally, the high-layer signaling is Radio Resource Control (Radio Resource Control, RRC) signaling.

Optionally, the high-layer signaling is Media Access Control (Media Access Control, MAC) Control Element (Control Element, CE) signaling.

In some possible implementations, the UE periodically sends the first indication information and the second indication information to the network device.

Optionally, the sending period when the UE sends periodically may increase accordingly as the remaining power of the UE decreases.

In some possible implementations, in S301, when the remaining power of the UE is less than or equal to a second threshold, the first indication information and the second indication information are sent to the network device.

In an example, the second threshold refers to a second set proportion of the maximum power of the UE, for example, the second set proportion is 5%, 10%, 20%, etc. The second set proportion may be determined by the UE according to the requirement of the UE.

S302: the network device refrains from sending a downlink channel during a time period corresponding to the communication recovery duration, and/or, the UE refrains from monitoring a downlink channel during a time period corresponding to the communication recovery duration.

Optionally, the downlink channel is a downlink control channel or a downlink shared channel.

Optionally, in some implementations of the present application, the network device refraining from sending a downlink channel may mean that the network device does not expect the UE to monitor the downlink channel.

After the network device is informed of the communication recovery duration of the UE, it can refrain from sending downlink information (carried by the downlink channel) during the time period corresponding to the communication recovery duration, thereby saving scheduling resources; the UE refrains from monitoring the downlink channel during the time period corresponding to the communication recovery duration, thereby saving the power of the UE. In the embodiment of the present disclosure, the UE reports the communication recovery duration and the endurance capability to the network device, providing a multi-dimensional reference basis for the network device to perform reasonable communication scheduling for the UE. This enables the network device to refrain from scheduling the UE during the time period corresponding to the communication recovery duration, resume scheduling the UE after the time period corresponding to the communication recovery duration, and perform more reasonable scheduling according to the endurance capability, thereby improving the scheduling efficiency of the network device and enhancing the scheduling flexibility of the network device.

An embodiment of the present disclosure provides a communication recovery duration notification method, and the method includes: a UE sends second indication information to a network device.

For the definition of the second indication information, reference may be made to S301, which will not be repeated here.

In some possible implementations, the second indication information is sent to the network device when remaining power of the UE is less than or equal to a second threshold.

In some possible implementations, the second indication information is sent to the network device periodically.

In some possible implementations, the UE sends high-layer signaling to the network device, and the high-layer signaling includes the second indication information.

In some possible implementations, the UE periodically sends the second indication information to the network device.

Optionally, the sending period when the UE sends periodically may increase accordingly as the remaining power of the UE decreases.

In the embodiment of the present disclosure, the UE reports the endurance capability to the network device, so that the network device can apply the real-time endurance capability of the UE to various possible scheduling processes, which makes the communication scheduling of the network device for the UE conform to the endurance capability of the UE, thereby improving the scheduling accuracy of the network device.

An embodiment of the present disclosure provides a communication recovery duration notification method, which is performed by a user equipment. FIG. 4 is a flowchart of a method for sending communication recovery information according to an exemplary embodiment. As shown in FIG. 4, the method includes S401.

S401: sending first indication information to a network device.

For the definition of the first indication information, reference may be made to S201, which will not be repeated here.

The content of S401 is the same as that of S201, reference may be made to S201, and the description will not be repeated here.

In some possible implementations, S402 is further included: refraining from monitoring a downlink channel during a time period corresponding to the communication recovery duration.

In the embodiment of the present disclosure, the UE reports the communication recovery duration to the network device, providing an accurate reference basis for the network device to perform reasonable communication scheduling for the UE. This enables the network device to refrain from scheduling the UE during the time period corresponding to the communication recovery duration and resume scheduling the UE after the time period corresponding to the communication recovery duration, thereby improving the scheduling efficiency of the network device and enhancing the scheduling flexibility of the network device.

An embodiment of the present disclosure provides a communication recovery duration notification method, which is executed by a user equipment. FIG. 5 is a flowchart of a method for sending communication recovery information according to an exemplary embodiment. As shown in FIG. 5, the method includes S501.

S501: sending first indication information and second indication information to a network device.

For the definition of the first indication information, reference may be made to S201, which will not be repeated here. For the definition of the second indication information, reference may be made to S301, which will not be repeated here.

The content of S501 is the same as that of S301, reference may be made to S501, and the description will not be repeated here.

In some possible implementations, S502 is further included: refraining from monitoring a downlink channel during a time period corresponding to the communication recovery duration.

In the embodiment of the present disclosure, the UE reports the communication recovery duration and the endurance capability to the network device, providing a multi-dimensional reference basis for the network device to perform reasonable communication scheduling for the UE. This enables the network device to refrain from scheduling the UE during the time period corresponding to the communication recovery duration, resume scheduling the UE after the time period corresponding to the communication recovery duration, and perform more reasonable scheduling according to the endurance capability, thereby improving the scheduling efficiency of the network device and enhancing the scheduling flexibility of the network device.

An embodiment of the present disclosure provides a method for sending endurance capability, which is performed by a user equipment, and the method includes: sending second indication information to a network device.

For the definition of the second indication information, reference may be made to S301, which will not be repeated here.

In some possible implementations, the second indication information is sent to the network device when remaining power of the UE is less than or equal to a second threshold.

In some possible implementations, the second indication information is sent to the network device periodically.

In some possible implementations, the UE sends high-layer signaling to the network device, and the high-layer signaling includes the second indication information.

In some possible implementations, the UE periodically sends the second indication information to the network device.

Optionally, the sending period when the UE sends periodically may increase accordingly as the remaining power of the UE decreases.

In the embodiment of the present disclosure, the UE reports the endurance capability to the network device, so that the network device can apply the real-time endurance capability of the UE to various possible scheduling processes, which makes the communication scheduling of the network device for the UE conform to the endurance capability of the UE, thereby improving the scheduling accuracy of the network device.

An embodiment of the present disclosure provides a communication recovery duration notification method, which is executed by a network device. FIG. 6 is a flowchart of a method for receiving communication recovery information according to an exemplary embodiment. As shown in FIG. 6, the method includes S601.

S601: receiving first indication information sent by a user equipment.

For the definition of the first indication information, reference may be made to S201, which will not be repeated here.

In some possible implementations, starting from the moment when the first indication information is received, after the communication recovery duration elapses, information sent by the UE to indicate that communication has been resumed is also received.

In some possible implementations, in S601, high-layer signaling sent by the UE is received, and the high-layer signaling includes the first indication information.

Optionally, the high-layer signaling is RRC signaling or MAC CE signaling.

In some possible implementations, S602 is further included: refraining from sending a downlink channel during the time period corresponding to the communication recovery duration.

In the embodiment of the present disclosure, after receiving the communication recovery duration sent by the UE, the communication recovery duration is used as a reference basis for reasonable communication scheduling of the UE. The UE is not scheduled during the time period corresponding to the communication recovery duration, and scheduling for the UE is resumed after the time period corresponding to the communication recovery duration, thereby improving the scheduling efficiency of the network device and enhancing the scheduling flexibility of the network device.

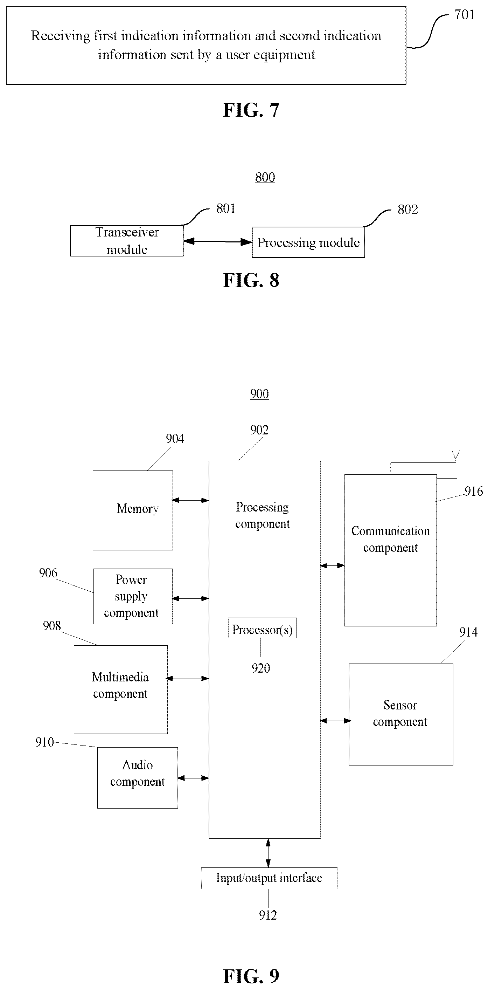

An embodiment of the present disclosure provides a communication recovery duration notification method, which is performed by a network device. FIG. 7 is a flowchart of a method for receiving communication recovery information according to an exemplary embodiment. As shown in FIG. 7, the method includes S701.

S701: receiving first indication information and second indication information sent by a user equipment.

For the definition of the first indication information, reference may be made to S201, which will not be repeated here. For the definition of the second indication information, reference may be made to S301, which will not be repeated here.

In some possible implementations, in S701, high-layer signaling sent by the UE is received, and the high-layer signaling includes the first indication information.

Optionally, the high-layer signaling is RRC signaling or MAC CE signaling.

In some possible implementations, S702 is further included: refraining from sending a downlink channel during the time period corresponding to the communication recovery duration.

In the embodiment of the present disclosure, the communication recovery duration and the endurance capability sent by the UE are received, and the communication recovery duration and the endurance capability are used as reference bases for reasonable communication scheduling of the UE. The UE is not scheduled during the time period corresponding to the communication recovery duration, scheduling for the UE is resumed after the time period corresponding to the communication recovery duration, and more reasonable scheduling is performed according to the endurance capability, thereby improving the scheduling efficiency of the network device and enhancing the scheduling flexibility of the network device.

An embodiment of the present disclosure provides a method for receiving endurance capability, which is performed by a network device, and the method includes: receiving second indication information sent by a UE.

For the definition of the second indication information, reference may be made to S301, which will not be repeated here.

In some possible implementations, high-layer signaling sent by the UE is received, and the high-layer signaling includes the second indication information.

In the embodiment of the present disclosure, the endurance capability sent by the UE is received, so that the endurance capability can be applied to various possible scheduling processes, which makes the communication scheduling of the network device for the UE conform to the endurance capability of the UE, thereby improving the scheduling accuracy of the network device.

The UE in the present disclosure may be an Ambient-IoT terminal, which is a type of Internet of things (Internet of things, IoT) terminal. Compared with NB-IoT terminals, Ambient-IoT terminals have lower complexity, manufacturing costs, and maintenance costs. An Ambient-IoT terminal may not include a battery and is activated and powered by received electromagnetic signals, or an Ambient-IoT may include a battery with a function of minimal power storage, but the battery does not need to be manually charged and can acquire power from external energy sources, such as through external electromagnetic waves, thermal energy, kinetic energy. Different Ambient IoT terminals may have different power acquisition and storage capabilities. When some Ambient IoT terminals have low power acquisition and storage capabilities, the available power thereof can only enable an Ambient IoT terminal to receive downlink signals, send uplink signals, or perform data processing within a certain period of time.

In some possible implementations, the UE in the present disclosure is an Ambient-IoT terminal with a battery, and the power storage capacity of the battery can support the terminal to receive downlink signals, send uplink signals, or perform data processing within a certain period of time.

Based on the same concept as the above method embodiments, an embodiment of the present disclosure provides a communication apparatus, which can have the functions of the UE in the above method embodiments and is used to execute the steps performed by the UE provided in the above embodiments. The functions may be implemented by hardware, by software, or by hardware executing corresponding software. The hardware or software includes one or more modules corresponding to the above functions.

In a possible implementation, the communication apparatus 800 as shown in FIG. 8 may serve as the user equipment involved in the above method embodiments and execute the steps performed by the UE in the above method embodiments.

The electronic device 800 includes a transceiver module 801 and a processing module 802.

The transceiver module 801 is configured to send first indication information to a network device, where the first indication information indicates a communication recovery duration of the user equipment.

In some possible implementations, the communication recovery duration is a duration required for the user equipment to reach a first communication capability.

In some possible implementations, the first communication capability corresponds to power of the user equipment reaching a first threshold.

In some possible implementations, the processing module 802 is configured to determine the first threshold according to a protocol specification; or, the processing module 802 is configured to determine the first threshold according to a requirement of the user equipment.

In some possible implementations, the communication recovery duration is one of a plurality of communication recovery durations specified in a protocol or configured by the network device.

In some possible implementations, the transceiver module 801 is further configured to send second indication information to the network device, where the second indication information indicates endurance capability.

In some possible implementations, the endurance capability includes at least one of the following:
a first parameter indicating remaining power;
a second parameter indicating endurance duration.

In some possible implementations, the first parameter is one of a plurality of first parameters specified in a protocol, and the second parameter is one of a plurality of second parameters specified in a protocol.

In some possible implementations, the transceiver module 801 is further configured to send high-layer signaling to the network device, where the high-layer signaling includes the first indication information.

In some possible implementations, the transceiver module 801 is further configured to send the first indication information to the network device when remaining power of the user equipment is less than or equal to a second threshold.

In some possible implementations, the transceiver module 801 is further configured to periodically send the first indication information to the network device.

In some possible implementations, the transceiver module 801 is further configured to refrain from monitoring a downlink channel during a time period corresponding to the communication recovery duration.

When the communication apparatus is a user equipment, its structure can be as shown in FIG. 9. For example, the device 900 can be a mobile phone, a computer, a digital broadcasting terminal, a messaging device, a game console, a tablet device, a medical device, a fitness device, a personal digital assistant, an Ambient-IoT terminal, etc.

Referring to FIG. 9, the device 900 may include one or more of the following components: a processing component 902, a memory 904, a power supply component 906, a multimedia component 908, an audio component 910, an input/output (I/O) interface 912, a sensor component 914, and a communication component 916.

The processing component 902 generally controls the overall operations of the device 900, such as operations associated with display, phone calls, data communication, camera operations and recording operations. The processing component 902 may include one or more processors 920 to execute instructions to complete all or part of the steps of the above-described methods. In addition, the processing component 902 may include one or more modules to facilitate interaction between the processing component 902 and other components. For example, the processing component 902 may include a multimedia module to facilitate interaction between the multimedia component 908 and the processing component 902.

The memory 904 is configured to store various types of data to support operations on the device 900. Examples of such data include instructions for any application or method operating on the device 900, contact data, phonebook data, messages, pictures, videos, and the like. The memory 904 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 906 provides power to various components of the device 900. The power supply component 906 may include a power management system, one or more power supplies and other components associated with generating, managing and distributing power for the device 900.

The multimedia component 908 includes a screen that provides an output interface between the device 900 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touches, swipes and gestures on the touch panel. The touch sensors can not only sense the boundary of a touch action or a swipe action but also detect a duration and a pressure associated with the touch operation or the swipe operation. In some embodiments, the multimedia component 908 includes a front camera and/or a rear camera. When the device 900 is in an operation mode, such as a shooting mode or a video mode, the front camera and/or the rear camera can receive external multimedia data. Each of the front camera and the rear camera may be a fixed optical lens system or have focal length and optical zoom capabilities.

The audio component 910 is configured to output and/or input audio signals. For example, the audio component 910 includes a microphone (MIC). When the device 900 is in an operation mode, such as a call mode, a recording mode and a voice recognition mode, the microphone is configured to receive external audio signals. The received audio signals may be further stored in the memory 904 or sent via the communication component 916. In some embodiments, the audio component 910 further includes a speaker for outputting audio signals.

The I/O interface 912 provides an interface between the processing component 902 and a peripheral interface module, and the peripheral interface module may be a keyboard, a click wheel, buttons or the like. These buttons may include, but are not limited to, a home button, a volume button, a start button and a lock button.

The sensor component 914 includes one or more sensors for providing status assessments of various aspects for the device 900. For example, the sensor component 914 can detect the on/off state of the device 900, the relative positioning of components such as the display and the keypad of the device 900, and the sensor component 914 can also detect changes in the position of the device 900 or a component of the device 900, the presence or absence of user contact with the device 900, the orientation or acceleration/deceleration of the device 900, and temperature changes of the device 900. The sensor component 914 may include a proximity sensor configured to detect the presence of nearby objects without any physical contact. The sensor component 914 may also include an optical sensor, such as a CMOS or CCD image sensor, for use in imaging applications. In some embodiments, the sensor component 914 may further include an acceleration sensor, a gyroscope sensor, a magnetic sensor, a pressure sensor, or a temperature sensor.

The communication component 916 is configured to facilitate wired or wireless communication between the device 900 and other devices. The device 900 can access a wireless network based on a communication standard, such as WiFi, 4G or 5G, or a combination thereof. In an exemplary embodiment, the communication component 916 receives a broadcast signal or broadcast-related information from an external broadcast management system via a broadcast channel. In an exemplary embodiment, the communication component 916 further includes a near-field communication (NFC) module to facilitate short-range communication. For example, the NFC module can be implemented based on a radio frequency identification (RFID) technology, an infrared data association (IrDA) technology, an ultra-wideband (UWB) technology, a Bluetooth (BT) technology, and other technologies.

In an exemplary embodiment, the device 900 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above methods.

In an exemplary embodiment, there is further provided a non-transitory computer-readable storage medium including instructions, such as the memory 904 including instructions, and the instructions can be executed by the processor 920 of the device 900 to complete the above methods. For example, the non-transitory computer-readable storage medium may be a ROM, a random access memory (RAM), a CD-ROM, a magnetic tape, a floppy disk, an optical data storage device, and the like.

Based on the same concept as the above method embodiments, an embodiment of the present disclosure provides a communication apparatus, which can have the functions of the network device in the above method embodiments and is used to execute the steps performed by the network device provided in the above embodiments. The functions can be implemented by hardware, by software, or by hardware executing corresponding software. The hardware or software includes one or more modules corresponding to the above functions.

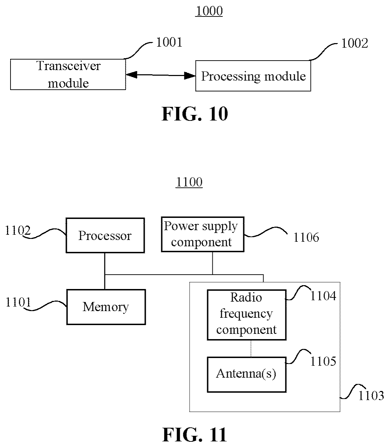

In a possible implementation, the communication apparatus 1000 as shown in FIG. 10 can serve as the user equipment involved in the above method embodiments and execute the steps performed by the network device in the above method embodiments.

The electronic device 1000 includes a transceiver module 1001 and a processing module 1002.

The transceiver module 1001 is configured to receive first indication information sent by a user equipment, where the first indication information indicates a communication recovery duration of the user equipment.

In some possible implementations, the communication recovery duration is a duration required for the user equipment to reach a first communication capability.

In some possible implementations, the first communication capability corresponds to power of the user equipment reaching a first threshold.

In some possible implementations, the communication recovery duration is one of a plurality of communication recovery durations specified in a protocol or configured by the network device.

In some possible implementations, the method further includes:
receiving second indication information sent by the user equipment, where the second indication information indicates endurance capability.

In some possible implementations, the endurance capability includes at least one of the following:
a first parameter indicating remaining power;
a second parameter indicating endurance duration.

In some possible implementations, the first parameter is one of a plurality of first parameters specified in a protocol, and the second parameter is one of a plurality of second parameters specified in a protocol.

In some possible implementations, the transceiver module 1001 is further configured to receive high-layer signaling sent by the user equipment, where the high-layer signaling includes the first indication information.

In some possible implementations, the transceiver module 1001 is further configured to periodically receive the first indication information sent by the user equipment.

In some possible implementations, the transceiver module 1001 is further configured to refrain from sending a downlink channel during a time period corresponding to the communication recovery duration.

The structure of the network device can be as shown in FIG. 11. As shown in FIG. 11, the device 1100 includes a memory 1101, a processor 1102, a transceiver component 1103, and a power supply component 1106. The memory 1101 is coupled to the processor 1102 and can be configured to store programs and data necessary for the communication device 1100 to implement various functions. The processor 1102 is configured to support the communication device 1100 to perform corresponding functions in the above methods, which can be implemented by invoking programs stored in the memory 1101. The transceiver component 1103 may be a wireless transceiver, which can be configured to support the communication device 1100 to receive signaling and/or data and send signaling and/or data through a wireless air interface. The transceiver component 1103 may also be referred to as a transceiver unit or a communication unit. The transceiver component 1103 may include a radio frequency component 1104 and one or more antennas 1105, where the radio frequency component 1104 may be a remote radio unit (remote radio unit, RRU), which can be specifically configured for transmitting radio frequency signals and converting radio frequency signals and baseband signals, and the one or more antennas 1105 can be specifically configured for radiating and receiving radio frequency signals.

When the communication device 1100 needs to send data, the processor 1102 can perform baseband processing on the data to be sent, output a baseband signal to the radio frequency unit, and the radio frequency unit performs radio frequency processing on the baseband signal and then sends the radio frequency signal through the antenna(s) in the form of electromagnetic waves. When data is sent to the communication device 1100, the radio frequency unit receives a radio frequency signal through the antenna(s), converts the radio frequency signal into a baseband signal, and outputs the baseband signal to the processor 1102, and the processor 1102 converts the baseband signal into data and processes the data.

An embodiment of the present disclosure provides a computer-readable storage medium having stored therein instructions that, when invoked and executed on a computer, cause the computer to perform the above methods.

Other implementations of the present disclosure will be readily apparent to those skilled in the art after considering the specification and practicing the invention disclosed herein. The present application is intended to cover any variations, uses, or adaptive changes of the embodiments of the present disclosure, which follow the general principles of the embodiments of the present disclosure and include common knowledge or conventional technical means in the technical field not disclosed in the present disclosure. The specification and embodiments are only regarded as exemplary, and the true scope and spirit of the embodiments of the present disclosure are pointed out by the following claims.

It should be understood that the embodiments of the present disclosure are not limited to the precise structures described above and shown in the drawings, and various modifications and changes can be made without departing from their scope. The scope of the embodiments of the present disclosure is only limited by the appended claims.

### Industrial Applicability

The scheduling efficiency of network equipment is improved.

## Claims

1. A communication recovery duration notification method, performed by a user equipment, wherein the method comprises:
sending first indication information to a network device, wherein the first indication information indicates a communication recovery duration of the user equipment.

2. The method according to claim 1, wherein the communication recovery duration is a duration required for the user equipment to reach a first communication capability, and the first communication capability corresponds to power of the user equipment being greater than or equal to a first threshold.

3. The method according to claim 2, further comprising:
determining the first threshold according to a protocol specification; or
determining the first threshold according to a requirement of the user equipment.

4. The method according to claim 1, wherein the communication recovery duration is one of a plurality of communication recovery durations specified in a protocol or configured by the network device.

5. The method according to any one of claims 1 to 4, further comprising:
sending second indication information to the network device, wherein the second indication information indicates endurance capability.

6. The method according to claim 5, wherein the endurance capability comprises at least one of the following:
a first parameter indicating remaining power;
a second parameter indicating endurance duration.

7. The method according to any one of claims 1 to 6, wherein the first indication information is sent via high-layer signaling.

8. The method according to any one of claims 1 to 7, wherein the first indication information is sent in response to remaining power of the user equipment being less than or equal to a second threshold.

9. The method according to any one of claims 1 to 8, wherein the first indication information is sent periodically.

10. The method according to any one of claims 1 to 10, further comprising:
refraining from monitoring a downlink channel during a time period corresponding to the communication recovery duration.

11. A communication recovery duration notification method, performed by a network device, wherein the method comprises:
receiving first indication information sent by a user equipment, wherein the first indication information indicates a communication recovery duration of the user equipment.

12. The method according to claim 11, wherein the communication recovery duration is a duration required for the user equipment to reach a first communication capability, and the first communication capability corresponds to power of the user equipment reaching a first threshold.

13. The method according to claim 11 or 12, wherein the communication recovery duration is one of a plurality of communication recovery durations specified in a protocol or configured by the network device.

14. The method according to any one of claims 12 to 13, further comprising:
receiving second indication information sent by the user equipment, wherein the second indication information indicates endurance capability.

15. The method according to claim 16, wherein the endurance capability comprises at least one of the following:
a first parameter indicating remaining power;
a second parameter indicating endurance duration.

16. The method according to any one of claims 11 to 15, wherein the first indication information is received via high-layer signaling.

17. The method according to any one of claims 11 to 16, wherein the first indication information is received periodically.

18. The method according to any one of claims 11 to 17, further comprising:
refraining from sending a downlink channel to the user equipment during a time period corresponding to the communication recovery duration.

19. A communication recovery duration notification apparatus, configured in a user equipment, wherein the apparatus comprises:
a transceiver module, configured to send first indication information to a network device, wherein the first indication information indicates a communication recovery duration of the user equipment.

20. A communication recovery duration notification apparatus, configured in a network device, wherein the apparatus comprises:
a transceiver module, configured to receive first indication information sent by a user equipment, wherein the first indication information indicates a communication recovery duration of the user equipment.

21. An electronic device, comprising one or more processors and a memory, wherein,
the memory is configured to store a computer program; and
the one or more processors are configured to execute the computer program to implement the method according to any one of claims 1 to 10.

22. An electronic device, comprising one or more processors and a memory, wherein,
the memory is configured to store a computer program; and
the one or more processors are configured to execute the computer program to implement the method according to any one of claims 11 to 18.

23. A computer-readable storage medium having stored therein instructions that, when invoked and executed on a computer, cause the computer to perform the method according to any one of claims 1 to 10.

24. A computer-readable storage medium having stored therein instructions that, when invoked and executed on a computer, cause the computer to perform the method according to any one of claims 11 to 18.
